Europäisches Patentamt

European Patent Office

Office européen des brevets

(19)

(11) Veröffentlichungsnummer: **0 290 717 B1**

# EUROPÄISCHE PATENTSCHRIFT

(12)

(45) Veröffentlichungstag der Patentschrift: **11.12.91**

(21) Anmeldenummer: **88100751.2**

(22) Anmeldetag: **13.07.85**

(51) Int. Cl.⁵: **G11B 23/023, G11B 33/04**

(60) Veröffentlichungsnummer der früheren
Anmeldung nach Art. 76 EPÜ: **0 190 180**

(54) **Vorrichtung zum Aufbewahren von flachen Aufzeichnungsträgern.**

(30) Priorität: **03.08.84 DE 8423125 U**

(43) Veröffentlichungstag der Anmeldung:
**17.11.88 Patentblatt 88/46**

(45) Bekanntmachung des Hinweises auf die
Patenterteilung:
**11.12.91 Patentblatt 91/50**

(84) Benannte Vertragsstaaten:
**AT BE CH DE FR GB IT LI NL SE**

(56) Entgegenhaltungen:
**DE-A- 2 343 487        DE-A- 2 542 622
DE-A- 2 545 771        DE-A- 3 216 888
DE-A- 3 301 203        DE-A- 3 329 618
FR-A- 2 274 106        GB-A- 2 102 768**

(73) Patentinhaber: **idn inventions and development of novelties ag
Hartbertstrasse 9
CH-7002 Chur(CH)**

(72) Erfinder: **Ackeret, Peter
Allmendstrasse 18
CH-8700 Küsnacht(CH)**

(74) Vertreter: **Sparing Röhl Henseler Patentanwälte European Patent Attorneys
Rethelstrasse 123
W-4000 Düsseldorf 1(DE)**

## Beschreibung

Die Erfindung betrifft eine Vorrichtung zum Aufbewahren von flachen Aufzeichnungsträgern, wie Kompaktkassetten oder Kompaktdisks. Eine Vorrichtung, die die im Oberbegriff des Patentanspruchs 1 genannten Merkmale aufweist, ist aus der DE-A-23 43 487 bekannt.

Bei der bekannten Vorrichtung ist eine zwischen einer Schieberrückwand und dem Gehäuse eingelegte Schraubendruckfeder vorgesehen. Sie muß im komprimierten Zustand, also bei eingeschobenem Schieber, noch zwischen Schieber und Gehäuse Platz finden, wodurch sich die Tiefe der Vorrichtung entsprechend gegenüber derjenigen Tiefe vergrößert, die eigentlich für den betreffenden Aufzeichnungsträger nur benötigt würde. Darüberhinaus ist eine solche Schraubendruckfeder seitlich gegen Ausknicken abzustützen, wodurch sich ebenfalls ein gewisser Platzbedarf in der Höhe der Vorrichtung sowie Materialverbrauch für die Abstützelemente ergibt.

Aufgabe der Erfindung ist es, die gattungsgleiche Vorrichtung derart weiterzubilden daß der Platzbedarf in der Tiefe verringert wird, was insbesondere dann von Vorteil ist, wenn die Vorrichtung in Ausnehmungen von Kraftfahrzeugen einzubauen ist, deren Volumen begrenzt ist.

Die erfindungsgemäße Lösung dieser Aufgabe ergibt sich aus Patentanspruch 1; die Unteransprüche definieren bevorzugte Weiterbildungen dieses Konzepts.

Aus FR-A-2 274 106 ist eine gattungsmäßig abweichende Konstruktion eines Kassettenbehälters bekannt. In einem Gehäuse ist ein Transportorgan schwenkbeweglich gelagert und fördert eine Kassette in eine Entnahmeposition. In einem Ausführungsbeispiel ist eine neben dem Transportorgan angeordnete Zugfeder vorgesehen, die das Transportorgan in diese Entnahmeposition vorspannt, jedoch kurz vor deren Erreichen wieder abbremst. Diese Konzeption erfordert zwar in der Tiefe relativ wenig Platz, dafür ist jedoch die Breite viel größer als für die Unterbringung des Aufbewahrungsguts eigentlich nötig.

Ausführungsbeispiele des Gegenstandes der Erfindung werden nachstehend unter Bezugnahme auf die beigefügten Zeichnungen im einzelnen erläutert.

Fig. 1    zeigt einen Horizontalschnitt durch die fertigmontierte Vorrichtung von oben gesehen,

Fig. 2    ist ein Teilschnitt nach Linie 5-5 der Fig. 1,

Fig. 3    ist ein Teilschnitt nach Linie 6-6 der Fig. 1,

Fig. 4    ist ein Horizontalschnitt analog zu Fig. 1 einer zweiten Ausführungsform, wobei jedoch der Schieber in der zweiten Position dargestellt ist,

Fig. 5    ist ein Schnitt nach Linie 8-8 der Fig. 4,

Fig. 6    ist ein Schnitt nach Linie 9-9 der Fig. 5,

Fig. 7    ist ein Teilschnitt nach Linie 10-10 der Fig. 4.

Das erste Ausführungsbeispiel bezieht sich auf eine Vorrichtung zum Aufbewahren von Kompaktkassetten, während die zweite Ausführungsform Teil eines Behälters für Compactdisks ist.

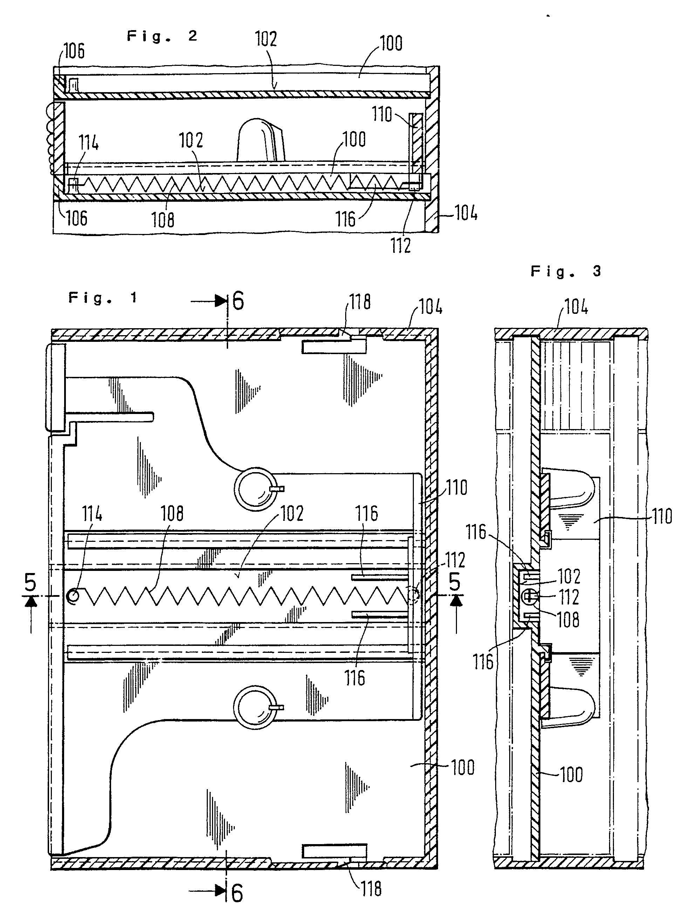

Bei derstener Ausführungsform weist die Platte 100 einen eingetieften Kanal 102 auf, der etwa in der Symmetrieebene des Gehäuses 104 liegt. Wie man in Fig. 2 erkennt, wird der Kanal frontseitig durch eine an die Platte 100 angeformte, hochstehende Leiste 106 verdeckt; um deren Höhe geht also Speicherraum verloren. Dafür kann aber die Gehäusetiefe fast vollständig für den Schieber ausgenutzt werden, da hier als Ausschubfederanordnung eine Schraubenzugfeder vorgesehen ist. Diese Feder 108 ist mit ihrem gehäuseinneren Ende an einem von der Schieberrückwand 110 abwärts ragenden Zapfen 112 eingehangen, mit ihrem frontseitigen Ende an einem Zapfen 114, der hinter der Leiste 106 vom Grund des Kanals 102 hochsteht. Beidseits der Feder erstrecken sich noch innerhalb des Kanals 102 Anschlagstücke 116 von der Schieberrückwand nach vorn, die die äußere Endstellung des Schiebers durch Auflaufen auf die Leiste 106 begrenzen. - Die Montage im Restgehäuse 104 erfolgt so, daß die Verankerungshaken 118 der Platte 100 in Durchbrüche der Gehäuseseitenwände eingreifen.

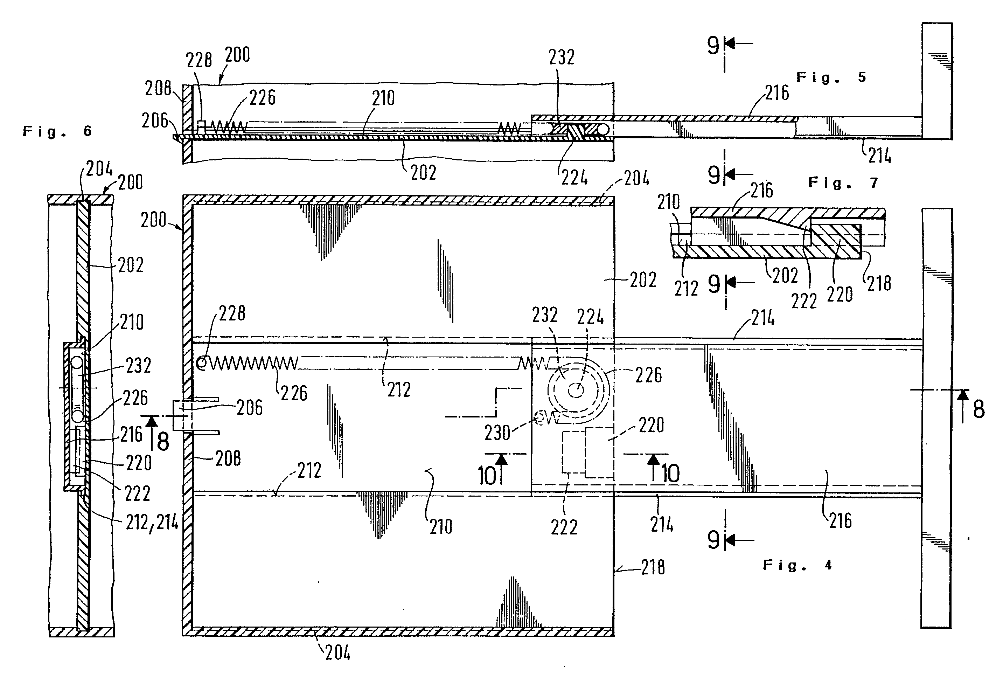

Die Ausführungsform nach Fig. 4 bis 7 ist für eine Vorrichtung zum Aufbewahren von Compactdisks bestimmt, könnte aber in ähnlicher Form auch für Kompaktkassetten abgewandelt werden, wenn diese beispielsweise nicht in Querrichtung (wie in Fig. 1-3), sondern in Längsrichtung im Schieber liegen. Neben den zeichnerisch dargestellten Elementen umfaßt die Vorrichtung nach Fig. 4-7 noch Halter für je eine Compactdisk, von denen mindestens einer von dem Schieber aus dem Gehäuse heraustransportiert wird; diesbezügliche Einzelheiten bilden keinen Teil der vorliegenden Erfindung, und es genügt, auf die ältere Anmeldung EP-A-83108472.8 hinzuweisen.

Das Restgehäuse 200 weist seitliche Nuten auf, in die die Platte 202 mit ihren Kanten 204 einschiebbar ist. Ein angeformter Haken 206 an der gehäuseinneren Endkante der Platte wird beim Einschub durch Auftreffen auf die Kante einer entsprechenden Gehäuseöffnung elastisch ausgelenkt und verhakt sich dann hinter dar Gehäuserückwand 208.

In ihrer Symmetrieebene weist die Platte 202 eine Eintiefung 210 auf, die sich über die gesamte Einschiebetiefe der Platte erstreckt und die zu den Gehäusenuten parallele Führungsnuten 212 für abgewinkelte Führungsstege 214 des Schiebers 216 aufweist. Nahe der frontseitigen Endkante 218 der Platte ragen von dem Grunde der Eintiefung 210 ein Anschlagblock 220 für eine Anschlagnase 222 des Schiebers sowie ein Poller 224 nach oben, um den eine Zugschraubenfeder 226 gelegt ist. Ein Ende der Feder 226 ist an einem Zapfen 228 eingehangen, der seitlich neben dem Verriegelungshaken in der Eintiefung 210 vorgesehen ist, und das andere Federende ist an einem Haken 230 befestigt, der nahe dem hinteren Schieberende in die Eintiefung 210 nach unten ragt. Zur Verringerung der Reibung ist auf den Poller 224 noch ein drehbar montiertes Röllchen 232 gesetzt, in dessen Umfangsnut die Feder geführt ist.

Während bei der Bauart nach Fig. 1-3 die automatische Montage etwas kompliziert wird, weil zunächst die Feder 108 an der Platte einzuhängen ist, dann der Schieber einzufädeln ist und schließlich das andere Federende an dem dann relativ schlecht zugänglichen schieberseitigen Zapfen eingehangen werden kann, ist die zuletzt beschriebene Anordnung der Feder günstiger, da sie vor dem Einfädeln des Schiebers in die Führungsnuten bereits mit beiden Enden an den Zapfen verankert werden kann und sich dann "von selbst" um das Röllchen 232 schlingt.

## Patentansprüche

1. Vorrichtung zum Aufbewahren von flachen Aufzeichnungsträgern, wie Kompaktkassetten oder Compaktdisks, mit einem Gehäuse (104, 200), mindestens einem Schieber (216), der zwischen einer ersten Position im Gehäuse und einer zweiten ausgefahrenen Position, in der ein Aufzeichnungsträger dem Schieber bequem entnehmbar ist, gleitbeweglich ist und sich im wesentlichen über die Gehäusetiefe erstreckt, einer Federanordnung (108, 226), die den Schieber in die zweite Position vorspannt, einer Verriegelungsanordnung, die den Schieber gegen die Federvorspannung im Gehäuse hält und manuell entriegelbar ist, sowie in dem Gehäuse unterhalb einer eine Auflagefläche für den Aufzeichnungsträger aufweisenden Schieberbodenplatte vorgesehenen Führungsschienen (212) für den Schieber, dadurch gekennzeichnet, daß unter der Auflagefläche ein Hohlraum für die Federanordnung (108, 226) vorgesehen ist, die auf eine Stelle (112, 230) des Schiebers (216) nahe seinem inneren Ende eine Zugspannung überträgt und sich bei Bewegung des Schiebers aus der ersten in die zweite Position verkürzt.

2. Vorrichtung nach Anspruch 1, dadurch gekennzeichnet, daß ein Ende der Federanordnung (108, 226) am Gehäuse festgelegt ist.

3. Vorrichtung nach Anspruch 2, dadurch gekennzeichnet, daß dieses Federende nahe der Gehäuseöffnung, durch die sich der Schieber bewegt, festgelegt ist.

4. Vorrichtung nach Anspruch 2 oder 3, dadurch gekennzeichnet, daß dieses Federende an einer Gehäusebodenplatte (100, 202) festgelegt ist.

5. Vorrichtung nach Anspruch 4, dadurch gekennzeichnet, daß die Gehäusebodenplatte ein gesondert vom Rest des Gehäuses gefertigtes, mit dem verbundenes Bauteil ist.

6. Vorrichtung nach Anspruch 1, dadurch gekennzeichnet, daß ein Ende der Federanordnung (108, 226) am Schieber festgelegt ist.

7. Vorrichtung nach Anspruch 6, dadurch gekennzeichnet, daß dieses Federende an der Schieberbodenplatte nahe ihrem inneren Ende festgelegt ist.

8. Vorrichtung nach Anspruch 1, dadurch gekennzeichnet, daß die Federanordnung (108) symmetrisch bezüglich zweier Führungsschienen angeordnet ist.

9. Vorrichtung nach Anspruch 8, dadurch gekennzeichnet, daß die Federanordnung eine mittig zwischen den Schienen gespannte Schraubenzugfeder (108) umfaßt.

10. Vorrichtung nach Anspruch 1, dadurch gekennzeichnet, daß der Schieber eine zentrale Bodenplatte aufweist.

11. Vorrichtung nach Anspruch 1, dadurch gekennzeichnet, daß der Schieber zwei Bodenplattenabschnitte seitlich von zwei Führungsschienen oberhalb der Federanordnung aufweist.

12. Vorrichtung nach Anspruch 1, dadurch gekennzeichnet, daß die Federanordnung eine mit einem Ende nahe einer Gehäuserückwand befestigte Schraubenzugfeder (226) umfaßt, die um eine nahe der Gehäusefront an einem Gehäuseboden drehbar angeordnete Rolle gelegt und mit ihrem andern Ende am Schieber nahe dessen innerem Schieberbodenende befestigt ist.

13. Vorrichtung nach einem der vorangehenden Ansprüche, bei der ein bestimmter Kunststoff für die Fertigung des Schiebers verwendet wird, dadurch gekennzeichnet, daß zumindest der Gehäuseteil, an dem der Schieber geführt ist, aus einem anderen Kunststoff besteht, und daß die beiden verschiedenen Kunststoffe eine reibungsarme Paarung bilden.

14. Vorrichtung nach Anspruch 1, dadurch gekennzeichnet, daß eine Gehäusebodenplatte einen Hohlraum in Form eines Kanals zur Unterbringung der Federanordnung aufweist.

15. Vorrichtung nach Anspruch 14, dadurch gekennzeichnet, daß eine Schieberfrontwand die frontseitige Mündung des Kanals überdeckt.

16. Vorrichtung nach Anspruch 1, dadurch gekennzeichnet, daß die Schieberbodenplatte einen die Federanordnung aufnehmenden Hohlraum in Form eines Kanals aufweist.

**Claims**

1. Device for storing flat recording media, such as compact cassettes or compact discs, having a housing (104, 200), at least one slider member (216) that is arranged for sliding movement between a first position in the housing and a second ejected position, in which a recording medium can easily be removed from the slider member, and that extends substantially over the depth of the housing, a spring arrangement (108, 226) which biases the slider member towards the second position, a locking arrangement which holds the slider member in the housing against the bias of the spring and can be unlocked manually, and guide rails (212) for the slider member provided in the housing underneath a slider member base plate having a support surface for the recording medium, characterised in that underneath the support surface there is provided a cavity for the spring arrangement (108, 226) which spring arrangement applies tensile bias to a point (112, 230) on the slider member (216) close to its inner end and becomes shorter when the slider member moves from the first position to the second position.

2. Device according to claim 1, characterised in that one end of the spring arrangement (108, 226) is fixed to the housing.

3. Device according to claim 2, characterised in that the said end of the spring is fixed close to the housing opening through which the slider member moves.

4. Device according to claim 2 or 3, characterised in that the said end of the spring is fixed to a housing base plate (100, 202).

5. Device according to claim 4, characterised in that the housing base plate is a component manufactured separately from the rest of the housing and connected thereto.

6. Device according to claim 1, characterised in that one end of the spring arrangement (108, 226) is fixed to the slider member.

7. Device according to claim 6, characterised in that the said end of the spring is fixed to the slider member base plate close to the inner end thereof.

8. Device according to claim 1, characterised in that the spring arrangement (108) is arranged symmetrically with respect to two guide rails.

9. Device according to claim 8, characterised in that the spring arrangement comprises a helical tension spring (108) tensioned centrally between the rails.

10. Device according to claim 1, characterised in that the slider member has a central base plate.

11. Device according to claim 1, characterised in that the slider member has laterally of two guide rails above the spring arrangement two base plate portions.

12. Device according to claim 1, characterised in that the spring arrangement comprises a helical tension spring (226) affixed by one end close to a rear wall of the housing, which spring is passed around a roller rotatably arranged on a housing base close to the front of the housing and is attached by its other end to the slider member close to the internal base end thereof.

13. Device according to any one of the preceding claims, in which a particular plastics material is used for the manufacture of the slider member, characterised in that at least the housing portion on which the slider member is guided consists of a different plastics material, and the two different plastics materials form a low-friction pair.

14. Device according to claim 1, characterised in that a housing base plate has a cavity in the form of a channel for accommodating the spring arrangement.

**15.** Device according to claim 14, characterised in that a front wall of the slider member covers the front opening of the channel.

**16.** Device according to claim 1, characterised in that the slider member base plate has a cavity in the form of a channel that accommodates the spring arrangement.

## Revendications

**1.** Dispositif peur stocker des supports d'enregistrement plats, comme par exemple des cassettes compactes ou des disques compacts, comportant un boîtier (104, 200), au moins un tiroir (216), qui est déplaçable par glissement entre une première position dans le boîtier et une seconde position ressortie, dans laquelle un support d'enregistrement peut être retire aisément du tiroir, et qui s'étend sensiblement sur la profondeur du boîtier, un dispositif à ressort (108,226), qui précontraint le tiroir dans la seconde position, un dispositif de verrouillage, qui maintient le poussoir à l'encontre la précontrainte du ressort dans le boîtier et peut être déverrouillé manuellement, ainsi que des rails de guidage (212) prévus pour le tiroir, dans le boîtier, au-dessous d'une plaque de fond du tiroir qui comporte une surface d'appui pour le support d'enregistrement, caractérisé en ce qu'au-dessous de la surface d'appui une cavité est prévue, pour le dispositif à ressort (108,226), qui applique une contrainte de traction à un emplacement (112,230) du tiroir (216), à proximité de son extrémité intérieure et dont la taille diminue lors du déplacement du tiroir de la première position dans la seconde position.

**2.** Dispositif selon la revendication 1, caractérisé en ce qu'une extrémité du dispositif à ressort (108,226) est fixée sur le boîtier.

**3.** Dispositif selon la revendication 2, caractérisé en ce que cette extrémité du ressort est fixée à proximité de l'ouverture du boîtier, dans laquelle se déplace le tiroir.

**4.** Dispositif selon la revendication 2 ou 3, caractérisé en ce que cette extrémité du ressort est fixée sur une plaque de fond (100,202) du boîtier.

**5.** Dispositif selon la revendication 4, caractérisé en ce que la plaque de fond du boîtier est un composant fabriqué séparément du reste du boîtier et raccordé à ce dernier.

**6.** Dispositif selon la revendication 1, caractérié en ce qu'une extrémité du dispositif à ressort (108,226) est fixée au tiroir.

**7.** Dispositif selon la revendication 6, caractérisé en ce que cette extrémité du ressort est fixée à la plaque de fond du tiroir, à proximité de son extrémité intérieure.

**8.** Dispositif selon la revendication 1, caractérisé en ce que le dispositif à ressort (108) est disposé symétriquement par rapport à deux rails de guidage.

**9.** Dispositif selon la revendication 8, caractérisé en ce que le dispositif à ressort comporte un ressort hélicoïdal de traction (108) tendu en position centrée entre les rails.

**10.** Dispositif selon la revendication 1, caractérisé en ce que le tiroir possède une plaque de fond centrale.

**11.** Dispositif selon la revendication 1, caractérisé en ce que le tiroir possède une plaque de fond formée de deux sections situées latéralement par rapport aux deux rails de guidage, au-dessus du dispositif à ressort.

**12.** Dispositif selon la revendication 1, caractérisé en ce que le dispositif à ressort comprend un ressort hélicoïdal de traction (226), qui est disposé autour d'un galet monté rotatif sur le fond du boîtier, à proximité de l'avant de ce dernier, et est fixé par son autre extrémité au tiroir, à proximité de l'extrémité intérieure du fond de ce dernier.

**13.** Dispositif selon l'une des revendications précédentes, dans lequel on utilise une matière plastique déterminée pour la fabrication du tiroir, caractérisé en ce qu'au moins la partie du boîtier, sur laquelle le tiroir est guidé, est réalisée en une autre matière plastique et en ce que les deux matières plastiques différentes forment un couple apparié présentant un faible frottement.

**14.** Dispositif selon la revendication 1, caractérisé en ce qu'une plaque de fond du boîtier possède une cavité se présentant sous la forme d'un canal permettant d'y loger le dispositif à ressort.

**15.** Dispositif selon la revendication 14, caractérisé en ce qu'une paroi avant du tiroir recouvre l'embouchure avant du canal.

16. Dispositif selon la revendication 1, caractérisé en ce que la plaque de fond du tiroir possède une cavité en forme de canal, qui loge le dispositif à ressort.

Fig. 2

Fig. 1

Fig. 3

7

Fig. 5

Fig. 6

Fig. 7

Fig. 4

EP 0 290 717 B1

8